Europäisches Patentamt

European Patent Office

Office européen des brevets

(19)

(11) Veröffentlichungsnummer: **0 022 916**
**B1**

(12) # EUROPÄISCHE PATENTSCHRIFT

(45) Veröffentlichungstag der Patentschrift:
13.02.85

(51) Int. Cl.⁴: **F 16 K 47/02**

(21) Anmeldenummer: 80103039.6

(22) Anmeldetag: 31.05.80

(54) **Rückschlagventil.**

(30) Priorität: 21.07.79 DE 2929610

(43) Veröffentlichungstag der Anmeldung:
28.01.81 Patentblatt 81/4

(45) Bekanntmachung des Hinweises auf die Patenterteilung:
13.02.85 Patentblatt 85/7

(84) Benannte Vertragsstaaten:
AT DE FR GB IT NL SE

(56) Entgegenhaltungen:
DE - A - 1 750 130
DE - A - 2 062 116
DE - U - 7 339 032
GB - A - 1 105 467
US - A - 2 934 085
US - A - 2 956 584
US - A - 3 072 143
US - A - 3 590 851

(73) Patentinhaber: WABCO Westinghouse
Fahrzeugbremsen GmbH, Am Lindener
Hafen 21 Postfach 91 12 80, D-3000 Hannover 91 (DE)

(72) Erfinder: Deike, Karl-Heinz, Feldstrasse 17.
D-3017 Pattensen 5 (DE)
Erfinder: Pohl, Wolfgang, Im Stühe 27, D-3008 Garbsen
(DE)
Erfinder: Ulrich, Helmut, Schiergrund 19, D-3257 Springe
(DE)
Erfinder: König, Heinz-Werner, Luisenstrasse 6,
D-3013 Barsinghausen (DE)
Erfinder: Lochte-Holtgreven, Albrecht, Schusterbrink 4,
D-3016 Seelze 6 (DE)

(74) Vertreter: Schrödter, Manfred, WABCO Westinghouse
Fahrzeugbremsen GmbH Am Lindener
Hafen 21 Postfach 91 12 80, D-3000 Hannover 91 (DE)

**Beschreibung**

Die Erfindung betrifft ein Rückschlagventil, dessen Anordnung in Druckluftanlagen, insbesondere in Ventileinrichtungen, von Druckluft-Bremsanlagen erfolgt, gemäß dem Oberbegriff des Anspruchs 1.

Rückschlagventile werden beispielsweise in Druckregelventile eingebaut, deren Aufgabe es ist, den Druck in einer Druckluftanlage zu regeln. Diese Ventile verfügen über einen mit dem Drucklufterzeugerkreis der Druckluftanlage in Verbindung stehenden Einlaßanschluß und über einen mit dem Druckluftverbraucherkreis der Druckluftanlage in Verbindung stehenden Auslaßanschluß.

In Fahrzeug-Druckluftbremsanlagen regelt ein Druckregler die in den Bremskreisen und in den sogenannten Nebenverbraucherkreisen erforderliche Druckhöhe, wobei bei Erreichen dieser bestimmten Druckhöhe der Druckregler die von einem Luftpresser erzeugte Druckluft in die Atmosphäre entlüftet bzw. den Luftpresser selbst auf Leerlauf schaltet. Um nun zu verhindern, daß während dieser Leerlaufphase Luft aus den Verbraucherkreisen über den Druckregler zurückströmt, sind in den Auslässen des Druckreglers oder der Ventileinrichtung Rückschlagventile angeordnet, welche auch ein Zurückströmen der Druckluft bei evtl. vor dem Rückschlagventil im Drucklufterzeugerkreis auftretenden Undichtigkeiten verhindern.

Beim Durchströmen von Druckluft durch das Rückschlagventil entstehen Schwingungen des Ventilkörpers, die aufgrund ihrer hohen Frequenz Geräusche verursachen können, welche für das menschliche Ohr mitunter sehr unangenehm sind. Diese Schwingungen treten insbesondere dann auf, wenn die Verbraucheranlage fast gefüllt ist und somit keine großen Druckunterschiede zwischen Drucklufterzeugerkreis und der Verbraucheranlage bestehen.

Durch die US-Patentschrift 3 072 143 ist ein Rückschlagventil der eingangs genannten Art vorbekannt, bei dem ein einen Ventilkörper tragender Ventilstößel mit einer Ausnehmung versehen ist, die zur Aufnahme von zusätzlichen federnden Elementen wie Federn, Kugeln etc. dient. Die federnden Elemente ragen aus der Ausnehmung des Ventilstößels heraus und liegen an der Innenwand des Ventilgehäuses an, um mittels Reibung ein Dämpfungsglied zur Vermeidung von Schwingungen zu bilden. Dieses vorbekannte Rückschlagventil zeigt jedoch eine relativ aufwendige und teure Konstruktion bezüglich des Dämpfungsgliedes.

Es ist ferner durch die US-Patentschrift 645 722 ein als Überströmventil dienendes Sitzventil bekannt, bei dem auf der Zuströmseite des Ventils mehrere, am Ventilkörper angebrachte Führungselemente vorgesehen sind. Diese Führungselemente befinden sich mit Spiel innerhalb einer Bohrung und dienen zur seitlichen Führung des Ventilkörpers. Der Durchmesser der Bohrung ist nicht größer als der Durchmesser des Ventilsitzes. Um zu vermeiden, daß die Führungselemente Geräusche verursachen, weisen diese federnde Vorsprünge auf, die an der Innenwand der Bohrung anliegen und somit geräuschverursachende Bewegungen der Führungselemente verhindern. Die zusätzliche Verwendung derartiger Führungselemente mit federnden Vorsprüngen bei einem Rückschlagventil der eingangs genannten Art würde zu einer vergleichsweise aufwendigen Konstruktion führen.

Der Erfindung liegt deshalb die Aufgabe zugrunde, das eingangs genannte Rückschlagventil so zu verbessern, daß mit relativ einfachen Mitteln ohne zusätzliche Teile das Schwingen des Ventilkörpers in Öffnungsstellung vermieden wird.

Diese Aufgabe wird durch die in den Patentansprüchen 1 und 2 angegebenen erfindungsgemäßen Lösungen gelöst.

Zweckmäßige Weiterbildungen und Ausgestaltungen der Erfindung sind den Unteransprüchen zu entnehmen.

Die Erfindung soll nun anhand von Ausführungsbeispielen, welche in den Zeichnungen dargestellt sind, näher erläutert werden.

Es zeigt

Fig. 1 den Schnitt durch einen Druckregler im Bereich des Rückschlagventils,

Fig. 2 schematisch dargestellte Teilausschnitte eines Rückschlagventils mit halbrundem Ventilkörper und

Fig. 3 zwei schematisch dargestellte Teilausschnitte eines Rückschlagventils mit flachem Ventilkörper.

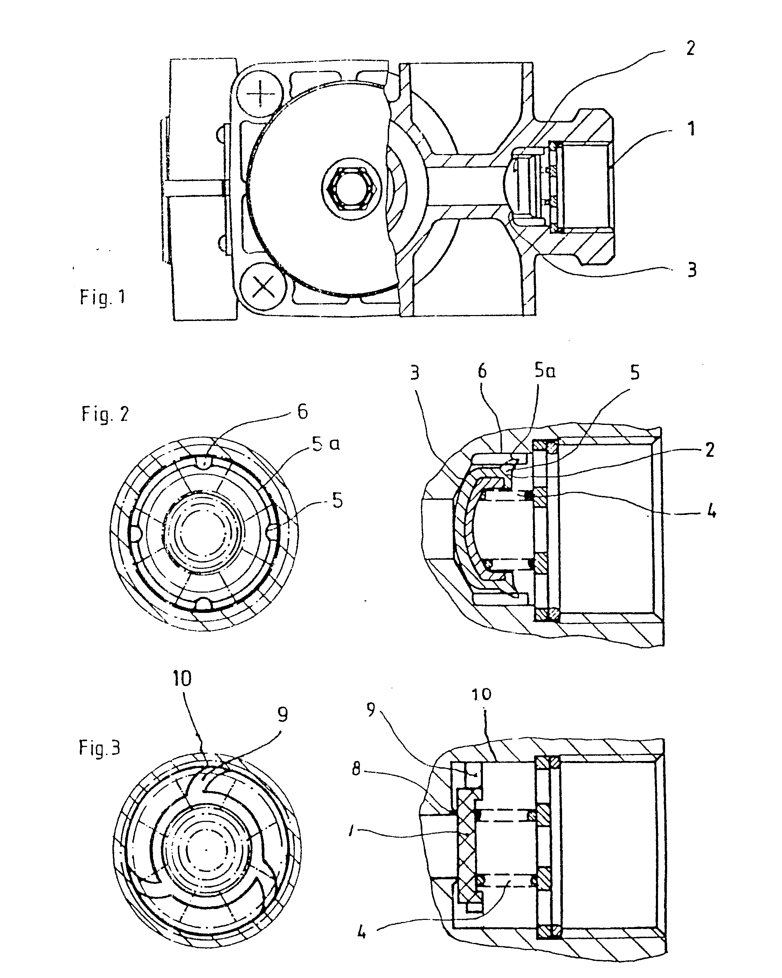

Die Fig. 1 zeigt als Anwendungsgebiet für ein erfindungsgemäßes Rückschlagventil einen Druckregler, in dessen Auslaßanschluß 1 ein aus einem elastischen Ventilkörper 2 und aus einem gehäusefesten Ventilsitz 3 gebildetes Rückschlagventil 2, 3 angeordnet ist. Wenn die über das Regelventil des Druckreglers durch das Rückschlagventil 2, 3 und durch den Anschluß 1 strömende Druckluft den Verbraucherkreis bis zu einer bestimmten Druckhöhe aufgefüllt hat, dann hält die Spannung einer Feder 4 das Rückschlagventil 2, 3 zur Sicherung des Druckes im Verbraucherkreis geschlossen.

In Fig. 2 sind neben den in Fig. 1 bezeichneten Teilen eine umlaufende elastische Wulst am Ventilkörper 2 mit der Position 5 und Rippen mit der Position 6 bezeichnet. Die Rippen 6 sind radial derart um den Ventilsitz 3 angeordnet, daß sich der Wulst 5 unter leichter Spannung daran anlegt und bei offenen Ventil 2, 3 die Luft zwischen den Rippen durchströmen kann, wobei die Rippen 6 eine so bemessene Länge aufweisen, daß die Wulst 5 in jeder Ventilstellung in Anlage bleibt. Die Wulst 5, dargestellt mit durchgezogenen Linien, zeigt die Anlage an eine Rippe 6, während die Wulst 5a, gestrichelt dargestellt, die Wulst 5 zwischen den Rippen 6 zeigt.

Die Darstellungen in der Fig. 3 zeigen einen flachen Ventilkörper 7, welcher mit einem gehäusefesten Ventilsitz 8 ein Rückschlagventil 7, 8 bildet. Anstelle von Stegen ist zur Schaffung von Luftdurchlässen die umlaufende Wulst unterbrochen, so daß mehrere elastische Lippen 9 entstehen, wobei die Gestaltung der Form dieser Lippen 9 derart ist, daß diese unter leichter Spannung zur Anlage an die Gehäusebohrung 10 kommen und dabei zwischen den Lippen 9 die Luft bei geöffneten Ventil 7, 8 strömen kann.

Die leicht vorgespannte Anlage des Wulstes an den Rippen bzw. der Lippen des Wulstes an der Gehäusebohrung in jeder Stellung des Rückschlagventils verhindert das Entstehen von Schwingungen des Ventilkörpers.

Das erfindungsgemäße Rückschlagventil ist nicht nur beim Druckregler anwendbar. Es kann vielmehr ganz allgemein eingesetzt werden.

**Patentansprüche**

1. Rückschlagventil, dessen Anordnung in Druckluftanlagen, insbesondere in Ventileinrichtungen von Druckluftbremsanlagen erfolgt, welches folgende Merkmale umfaßt:

a) es ist ein im Ventilgehäuse verschiebbarer, von einer Feder (4) gegen einen gehäusefesten Ventilsitz (3) belasteter Ventilkörper (2) vorgesehen;

b) es ist ein über den Ventilsitz (3) radial hinausragendes und mit dem Ventilkörper (2) verbundenes federndes Element vorgesehen;

c) das federnde Element stützt sich an einem Absatz (6) des Ventilgehäuses unter Vorspannung ab, wobei Strömungswege zum Durchlaß des durch das Ventil strömenden Strömungsmittels gebildet sind;

gekennzeichnet durch folgende Merkmale:

d) zur Bildung des federnden Elementes weist der Ventilkörper (2) einen einstückig über den Ventilsitz hinausragenden umlaufenden Wulst (5) auf;

e) zur Abstützung des Wulstes (5) weist das Ventilgehäuse nach innen weisende Rippen (6) auf, die so um den Ventilsitz herum angeordnet sind, daß der Wulst (5) unter leichter Vorspannung an den Rippen (6) anliegt.

2. Rückschlagventil, dessen Anordnung in Druckluftanlagen, insbesondere in Ventileinrichtungen von Druckluftbremsanlagen erfolgt, welches folgende Merkmale umfaßt:

a) es ist ein im Ventilgehäuse verschiebbarer von einer Feder (4) gegen einen gehäusefesten Ventilsitz (8) belasteter Ventilkörper (7) vorgesehen;

b) es sind mehrere radial über den Ventilsitz (8) hinausragende, mit dem Ventilkörper (7) verbundene federnde Elemente (9) vorgesehen;

c) die federnden Elemente (9) stützen sich an dem Ventilgehäuse unter Vorspannung ab, wobei Strömungswege zum Durchlaß des durch das Ventil strömenden Strömungsmittels gebildet sind;

gekennzeichnet durch folgendes Merkmal:

d) als federnde Elemente (9) dienen einstückig mit dem Ventilkörper (7) ausgebildete und in Umfangsrichtung des Ventilkörpers (7) gebogene Fortsätze (9).

**Claims**

1. A non-return valve for arrangement in compressed air installations, especially in valve arrangements of compressed air brake installations, which comprises the following features:

a) a valve member (2) is provided which can be displaced in the valve housing and is urged by a spring (4) against a valve seat (3) that is fixed to the housing;

b) a resilient element is provided which projects radially beyond the valve seat (3) and is joined to the valve member (2);

c) the resilient element is stressed against a shoulder (6) of the valve housing, flow paths for the passage of the flow medium flowing through the valve being formed;

characterised by the following features:

d) for the formation of the resilient element, the valve member (2) has a circumferential bead (5) projecting in one piece beyond the valve seat;

e) to support the bead (5), the valve housing has internal ribs (6) which are so arranged around the valve seat that the bead (5) rests against the ribs (6) under a slight bias.

2. A non-return valve for arrangement in compressed air installations, especially in valve arrangements of compressed air brake installations, which comprises the following features:

a) a valve member (7) is provided which can be displaced in the valve housing and is urged by a spring (4) against a valve seat (8) that is fixed to the housing;

b) a plurality of resilient elements (9) are provided which project radially beyond the valve seat (8) and are joined to the valve member (7);

c) the resilient elements (9) are stressed against the valve housing, flow paths for the passage of the flow medium flowing through the valve being formed;

characterised by the following feature:

d) there serve as resilient elements (9) projections (9) that are formed integrally with the valve member (7) and are curved in the circumferential direction of the valve member (7).

**Revendications**

1. Clapet anti-retour destiné à être monté dans des installations d'air comprimé, en particulier dans des dispositifs à soupape d'installations de freinage à air comprimé, et qui présente les caractéristiques suivantes:

a) il est prévu un élément mobile de clapet (2) pouvant coulisser dans le boîtier du clapet et sollicité vers un siège de clapet (3) solidaire du boîtier par un ressort (4);

b) il est prévu un élément à ressort relié à l'élément mobile (2) du clapet et qui fait saillie radialement au-delà du siège (3) du clapet;

c) l'élément à ressort s'appuie contre une saillie (6) du boîtier du clapet avec précontrainte, cependant qu'il se forme des voies d'écoulement pour le passage du fluide qui traverse le clapet;

caractérisé par les caractéristiques suivantes:

d) pour former l'élément à ressort, l'élément mobile (2) du clapet présente un bourrelet périphérique (5) d'une seule pièce qui fait saillie audelà du siège du clapet;

e) pour donner appui au bourrelet (5), le boîtier du clapet présente des nervures (6) dirigées vers l'intérieur, qui sont disposées sur le tour du siège du clapet de telle manière que le bourrelet (5) soit appuyé contre les nervures (6) avec une légère précontrainte.

2. Clapet anti-retour destiné à être monté dans des installations d'air comprimé, en particulier dans des dispositifs à soupape d'installations de freinage à air comprimé, qui présente les caractéristiques suivantes:

a) il est prévu un élément mobile de clapet (7) pouvant coulisser dans le boîtier du clapet et sollicité par un ressort (4) vers un siège de clapet (8) solidaire du boîtier;

b) il est prévu plusieurs éléments à ressort (9) reliés à l'élément mobile (7) du clapet et qui font saillie radialement au-delà du siège (8) du clapet;

c) les éléments à ressort (9) prennent appui avec précontrainte contre le boîtier du clapet, cependant qu'il se forme des voies d'écoulement pour le passage du fluide qui traverse le clapet;

caractérisé par la caractéristique suivante:

d) comme éléments à ressort (9), on utilise des prolongements (9) formés d'une seule pièce avec l'élément mobile (7) du clapet et recourbés dans la direction circonférentielle de l'élément mobile (7) du clapet.

Fig. 1

Fig. 2

Fig. 3